# EUROPEAN PATENT SPECIFICATION

(11) **EP 4 440 384 B1**
(45) Date of publication and mention of the grant of the patent: **24.09.2025**
(21) Application number: 22818717.5
(22) Date of filing: 18.11.2022
(51) Int. Cl.: A47G 29/14, G06Q 10/08

(54) **RECEPTACLE HOLDER AND ASSOCIATED METHOD**
BEHÄLTERHALTER UND ZUGEHÖRIGES VERFAHREN
PORTE RÉCEPTACLE ET PROCÉDÉ ASSOCIÉ

(30) Priority: 29.11.2021 SE 2151450
(43) Date of publication of application: 09.10.2024
(73) Proprietor: ASSA ABLOY AB, 107 23 Stockholm (SE)
(72) Inventor: EINBERG, Fredrik, 141 41 Huddinge (SE); NIEGMANN, Kaj, 141 42 Huddinge (SE)
(74) Representative: Kransell & Wennborg KB
(86) International application number: PCT/EP2022/082434
(87) International publication number: WO 2023/094279

(56) References cited:
- DE-B4- 10 101 680
- US-A1- 2021 025 199
- US-B2- 10 431 030
- US-B2- 10 661 916

## Description

### TECHNICAL FIELD

The present disclosure relates to the field of deliveries of receptacles for goods, and in particular to a receptacle holder for selectively allowing a receptacle to be removed, and associated method.

### BACKGROUND

With online shopping steadily increasing, deliveries of physical goods are also increasing. Consumers want fast and inexpensive deliveries, and the delivery companies want efficient deliveries.

One issue is how to deliver a package of goods when a recipient is not at home to receive the goods. The delivery may then need to be rescheduled, causing inefficiencies and increased cost. One option is that the delivery company drops off the package outside the home of the recipient, but there is then a risk that someone steals the package.

Another option is to provide a locker outside the home, that the delivery company is authorised to open and deliver packages into. However, such a locker needs to be at least as large as the largest package for which to support delivery. This may result in large and bulky lockers that may still be too small for a future, unexpectedly large package. Additionally, the locker needs to be discoverable by the delivery person in order to place the package inside. US 2021/025199 A1 discloses a receptacle holder according to the preamble of claim 1.

### SUMMARY

One object is to provide improved flexibility and security of delivering goods.

According to a first aspect, it is provided a receptacle holder according to claim 1.

The instructions to determine to unlock may comprise instructions that, when executed by the processor, cause the receptacle holder to: receive an unlock signal from a user device of a user.

The attachment member may enable a receptacle to be secured in locked engagement by pushing the receptacle to engage with the attachment member.

The attachment member may enable a receptacle to be secured in locked engagement by an external pushing force (of the receptacle towards the attachment member) causing the receptacle to engage with the attachment member.

The attachment member may enable a receptacle to be secured in locked engagement by an external pushing force by a user causing the receptacle to engage with the attachment member.

The attachment member may comprise a spring-biased latch to enable a receptacle to be secured in locked engagement by pushing the receptacle to engage with the attachment member.

The receptacle holder may comprise a plurality of the attachment members for engagement with respective receptacles.

The instructions to determine to unlock may comprise instructions that, when executed by the processor, cause the receptacle holder to determine which one of the plurality of attachment members to unlock; in which case the instructions to unlock the receptacle comprise instructions that, when executed by the processor, cause the receptacle holder to unlock the attachment member, of the plurality of attachment members, that was determined to be unlocked.

The receptacle holder may comprise a plurality of slots configured to hold respective receptacles engaged with respective attachment members.

According to a second aspect, it is provided a method as defined in claim 8.

The determining to unlock may comprise receiving an unlock signal from a user device of a user.

The method may further comprise: locking a receptacle placed in the attachment member using mechanical engagement between the attachment member and the receptacle when the receptacle is pushed to engage with the attachment member.

The attachment member may comprise a spring-biased latch (12) to enable a receptacle to be secured in locked engagement when the receptacle is pushed to engage with the attachment member.

The receptacle holder may comprise a plurality of the attachment members for engagement with respective receptacles.

The determining to unlock the attachment member may comprise determining which one of the plurality of attachment members to unlock; and the unlocking may comprises unlocking the attachment member, of the plurality of attachment members, that was determined to be unlocked.

The receptacle holder may comprise a plurality of slots configured to hold respective receptacles engaged with respective attachment members.

According to a third aspect not forming part of the invention, it is provided a computer program for selectively allowing a receptacle to be removed. The computer program comprises computer program code which, when executed on a receptacle holder causes the receptacle holder to: receive a valid signal to unlock the attachment member; and unlock the receptable from an attachment member being configured to engage with a receptacle to selectively keep the receptacle in a locked engagement with the receptacle holder.

According to a fourth aspect not forming part of the invention, it is provided a computer program product comprising a computer program according to the third aspect and a computer readable means comprising non-transitory memory in which the computer program is stored.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Figs 1A-B is a schematic diagram illustrating an environment in which embodiments presented herein can be applied for receiving a single receptacle.
Fig 2 is a schematic diagram illustrating an environment in which embodiments presented herein can be applied for receiving multiple receptacles.
Fig 3 is a schematic diagram illustrating an embodiment of an attachment member of the receptacle holders of Figs 1A-B;
Fig 4 is a schematic diagram illustrating delivery of receptacles to receptacle holders in embodiments according to Figs 1A-B;
Fig 5 is a schematic diagram illustrating delivery and return of receptacles to receptacle holders in embodiments according to Fig 2;
Fig 6 is a schematic diagram illustrating delivery of receptacle holders containing receptacles in embodiments according to Fig 2;
Fig 7 is flow chart illustrating embodiments of methods for selectively allowing a receptacle to be removed;
Fig 8 is a schematic diagram illustrating components of the receptacle holder of Figs 1A-B and Fig 2; and
Fig 9 shows one example of a computer program product 90 comprising computer readable means.

### DETAILED DESCRIPTION

The aspects of the present disclosure will now be described more fully hereinafter with reference to the accompanying drawings, in which certain embodiments of the invention are shown. These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

According to embodiments presented herein, a receptacle holder is provided for receiving a receptacle and selectively allowing the receptacle to be removed. The receptacle holder comprises an attachment member for mechanically engaging with the receptacle for locking the receptacle to the attachment member. This allows a receptacle of arbitrary size to be placed in engagement with the attachment member for locking the receptacle to the receptacle holder. A valid user can subsequently cause the receptacle holder to unlock the receptacle, allowing the user to remove the receptacle and access its content.

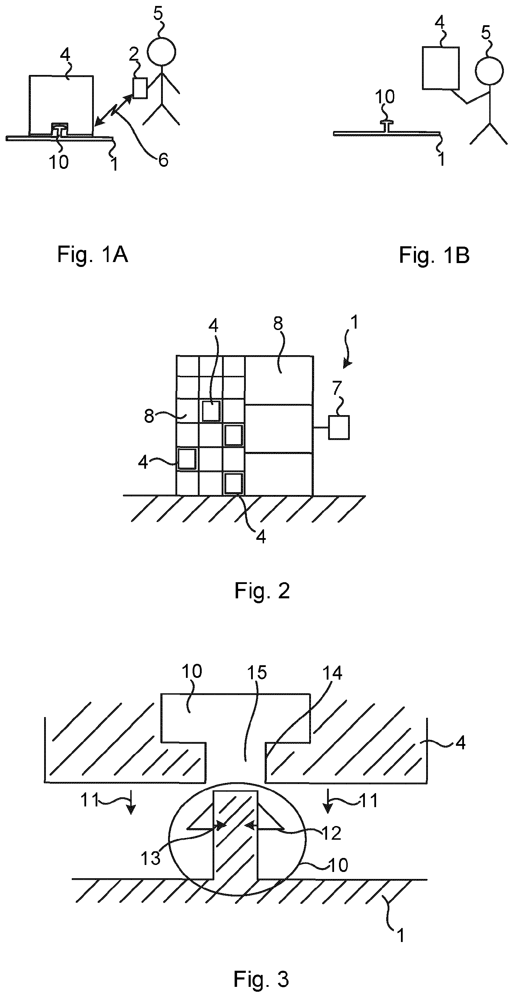

Figs 1A-B is a schematic diagram illustrating an environment in which embodiments presented herein can be applied for receiving a single receptacle 4.

A receptacle holder 1 comprises an attachment member 10, that is configured to engage with a receptacle 4 to selectively keep the receptacle 4 in a locked engagement with the receptacle holder 1. The receptacle holder 1 can be secured to ground, e.g. by being secured to a concrete base. In the situation illustrated by Fig 1A, the receptacle 4 has been placed onto the attachment member 10 to lock into place with the receptacle holder 1.

Optionally, the attachment member 10 is configured to enable a receptacle 4 to be secured in locked engagement by pushing the receptacle 4 to engage with the attachment member 10, i.e. without any other interaction with the receptacle holder 1.

The receptacle holder 1 can be attached to the ground or other physical structure to prevent a thief from stealing both the receptacle 4 and the receptacle holder 1. For instance, the receptacle holder 10 can be fixed to a concrete foundation or part of a building or other fixed structure.

A user 5 carries a user device 2 which is a portable electronic device, e.g. a smartphone, wearable device, tablet computer, etc. When the user 5 wants to remove the receptacle 4 from the attachment member 10 of the receptacle holder 1, the user causes the user device 2 to send an unlock signal to the receptacle holder 1. The unlock signal 1 can e.g. be sent from an application (also known as app) executing on the user device 2. The user 5 may need to authenticate (e.g. using a passcode and/or biometrics) with the user device 2 for the application of the user device 2 to send the unlock signal to the receptacle holder 1.

The unlock signal can be sent over a short-range wireless link 6 (e.g. Bluetooth Low Energy (BLE), Bluetooth, Near-Field Communication (NFC), etc.) or over a wide-area network, such as the Internet (not shown).

Once the unlock signal is received by the receptacle holder 1, the validity of the unlock signal is verified, e.g. by decrypting the unlock signal and/or verifying a cryptographic signature of the unlock signal. If valid, the receptacle holder 1 unlocks the receptacle 4 from the attachment member 10.

In Fig 1B, it is illustrated how, once unlocked, the receptacle 4 is free to be carried away by the user 5.

It is to be noted that the receptacle 4 can be of any suitable size.

The receptacle 4 can, in turn, contain any suitable number of packages. The receptable 4 can be of any suitable shape, e.g. box, cylinder, etc. The receptacle can be a shipping container. The receptacle 4 can contain its own authorisation ability, whereby also the receptacle 4 is locked until unlocked by the user 5, e.g. through the application. The receptacle 4 can be reusable. In this case, the user 5 removes the content (e.g. one or more packages) of the receptacle 4, after which the receptacle can be returned to a distribution centre to be reused for a subsequent delivery to any other recipient. A return process for returning goods can also be greatly simplified with the receptacle holder 1. When the receptable 4 (empty or containing goods) is to be returned, the user 5 attaches the receptacle 4 to the receptacle holder 1, after which the delivery company can unlock the receptacle 4, remove the receptacle 4 from the receptacle holder 1, and drive the receptacle 4 back to the distribution centre for reuse and potentially returning goods to the original sender.

Fig 2 is a schematic diagram illustrating an environment in which embodiments presented herein can be applied for receiving multiple receptacles in a multi-receptacle receptacle holder 1. In this embodiment, the receptacle holder 1 contains a plurality of slots 8. Each slot is configured to hold a respective receptacle 4 that engages with a respective attachment member 10. In other words, each slot 8 contains an attachment member for locking a receptacle 4 that is pushed into the slot 8. Alternatively, a set of receptacle holders similar to those presented in Fig 1A-B are provided, e.g. in a line, whereby the slots are not required.

Optionally, a user interface 7 is provided for allowing a user to authenticate directly with the receptacle holder 1 without requiring a particular application on a user device. The user 5 could then e.g. receive a text message containing a numerical code that the user inputs to the user interface 7, e.g. using a touchscreen or keypad. The receptacle holder 1 has previously been configured to associate the numerical code with the receptacle 4 for the particular user that has been pushed into one of the slots 8. In this way, when the numerical code is entered, the receptacle 4 associated with the user is released and can be removed from its slot 8.

It is to be noted that the slots 8 can be of different sizes to accommodate receptacles 4 of different sizes.

Fig 3 is a schematic diagram illustrating an embodiment of an attachment member of the receptacle holders of Figs 1A-B.

The attachment member 10 here comprises one or more spring-biased latches 12 to enable a receptacle 4 to be secured in locked engagement by pushing the receptacle to engage with the attachment member 10. The latch 12 is here spring-biased outwards, whereby when the receptacle 4 is pushed in a direction 11 towards the receptacle holder 1, walls 14 of an opening 15 of the receptacle 4 cause the latch(es) 12 to be pushed inward 13 of the attachment member 10. In the receptacle 4, above the walls 14 of the opening 15, there is a larger cavity 16 that allows, when the receptacle 4 is pushed sufficiently far, the spring-biased latch 12 to again push outwards, whereby the receptacle 4 is locked.

To unlock the receptacle 4, the attachment member 10 can pull the latch(es) 12 in, e.g. using an electric motor, allowing the receptacle to be pulled away from the receptacle holder 1.

Other mechanical constructions of the attachment member 10 are equally possible that enable a receptacle 4 to be secured in locked engagement by pushing the receptacle to engage with the attachment member 10, and where the receptacle 4 can be selectively unlocked and released from the attachment member and thus from the receptacle holder.

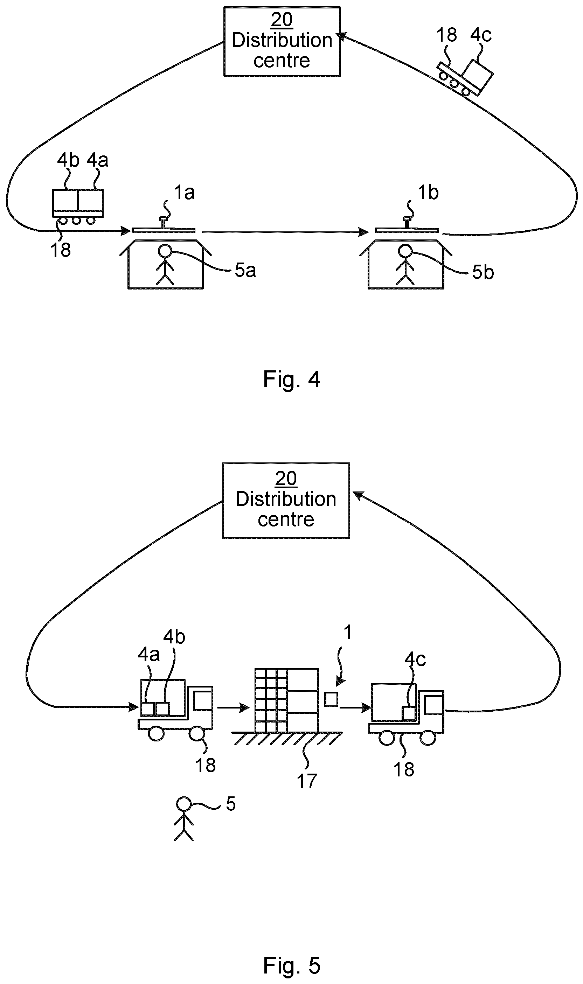

Fig 4 is a schematic diagram illustrating delivery of receptacles to receptacle holders in embodiments according to Figs 1A-B. In the example shown in Fig 4, there are two users 5a-b on the route of a delivery vehicle 18 for delivering receptacles 4a-b. The delivery vehicle 18 can be a manned delivery vehicle or an unmanned autonomous or remotely controlled (aerial or terrestrial) vehicle. The delivery vehicle 18 is loaded with two receptacles 4a-b at a distribution centre. It is to be noted that the number of receptacles that are loaded on the delivery vehicle 18 can be fewer or more than two. As explained above, each receptacle 4a-b can contain one or more packages. Moreover, the receptacles 4a-b can be of the same size or different sizes.

The delivery vehicle 18 drives to the house of the first user 5a and delivers the first receptacle 4a to the first receptacle holder 1a. Subsequently, the delivery vehicle 18 drives to the house of the second user 5b, and delivers the second receptacle 4b to the second receptacle holder 1b. It is to be noted that since the receptacles are locked into place by respective attachment members of the receptacle holders 1a-b, the users 5a-b do not need to be at home when the delivery takes place. Additionally, the receptacle is secure enough to discourage burglary through destruction of the receptacle.

The delivery vehicle 18 can also pick up one or more return receptacles 4c and drive the return receptacle 4c back to the distribution centre 20. The return receptacle 4c can be an empty receptacle for reuse or can optionally contain goods that are to be returned from a previous delivery.

Fig 5 is a schematic diagram illustrating delivery and return of receptacles to receptacle holders in embodiments according to Fig 2. In the example shown in Fig 5, the delivery vehicle 18 delivers receptacles 4a-b to a multi-receptacle receptacle holder 1, as illustrated in Fig 2 and described above. In this example, the delivery vehicle 18 is loaded with two receptacles 4a-b at a distribution centre. It is to be noted that the number of receptacles that are loaded on the delivery vehicle 18 can be fewer or more than two. As explained above, each receptacle 4a-b can contain one or more packages. Moreover, the receptacles 4a-b can be of the same size or different sizes.

The delivery vehicle 18 drives to a site 17 of the multi-receptacle receptacle holder 1, and the receptacles are inserted to slots of the receptacle holder 1. The receptacle holder keeps an association between a receptacle identifier and a slot identifier. Moreover, there is an association between the receptacle identifier and the user 5, so that the receptacle holder 10 can release the correct receptacle when the user 5 arrives and authenticates with the receptacle holder 1.

The delivery vehicle 18 can also pick up one or more return receptacles 4c for return delivery at the distribution centre 20. The return receptacle 4c can be an empty receptacle for reuse or can optionally contain goods that are to be returned from a previous delivery.

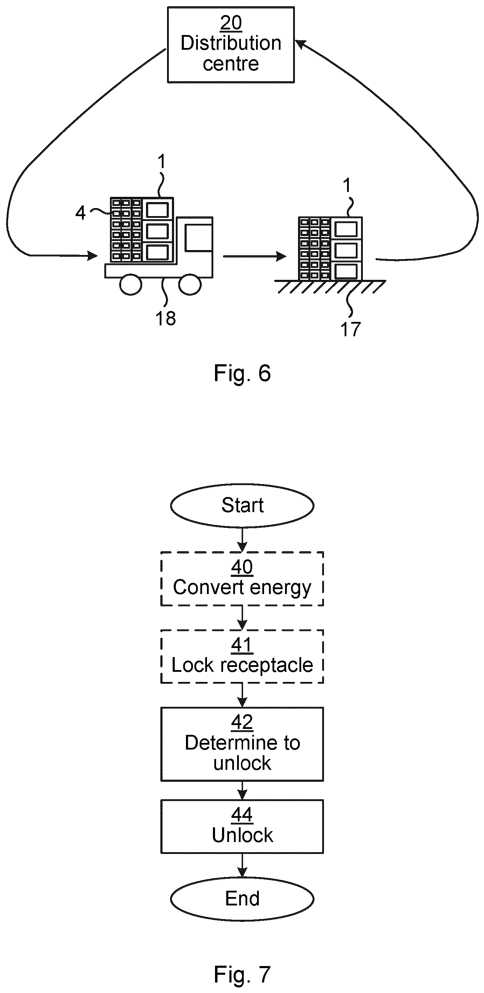

Fig 6 is a schematic diagram illustrating delivery of receptacle holders 1 containing receptacles in embodiments according to Fig 2. In this embodiment, a multi-receptacle receptacle holder 1 is filled with receptacles 4 at the distribution centre. The entire multi-receptacle receptacle holder 1 is then loaded onto a delivery vehicle 18 and delivered to the site 17. This allows for a very efficient delivery process.

Fig 7 is flow chart illustrating embodiments of methods for selectively allowing a receptacle to be removed, which is applicable both to a receptacle holder comprising a single attachment member (for engagement with a single receptacle as shown in Figs 1A-B) and to receptacle holders comprising a plurality of the attachment members 10 (for engagement with respective receptacles as illustrated in Fig 2). Optionally, the receptacle holder comprises a plurality of slots 8 configured to hold respective receptacles 4 engaged with respective attachment members 10.

According to the invention, in an *convert energy* step 40, the receptacle holder 1 converts mechanical energy, when a receptable 4 is secured in the attachment member 10, to electrical energy for powering the processor 60 using an energy harvesting module of the receptacle holder 1. The electrical energy can be stored in energy storage, such as a capacitor, battery supercapacitor, etc. The energy harvested in this way can be sufficient to completely power the electrical components of the receptacle holder, in which case no wired power or even battery needs to be provided (other than potentially for storing energy harvesting power). This allows for a long-term low-maintenance operation of the receptacle holder 1.

In an optional *lock receptacle* step 41, the receptacle holder 1 locks a receptacle 4 placed in the attachment member 10 using mechanical engagement between the attachment member and the receptacle 4 when the receptacle is pushed to engage with the attachment member 10. As explained above an illustrated in Fig 3, this can be achieved (passively) by the attachment member 10 comprising a spring-biased latch 12 to enable a receptacle 4 to be secured in locked engagement when the receptacle is pushed to engage with the attachment member 10. Alternatively, the attachment member is actively controlled by the controller of the receptacle holder 1 to enter a locked state with the receptacle.

In a *determine to unlock* step 42, the receptacle holder 1 determines to unlock the attachment member 10. This can be based on receiving an unlock signal from a user device 2 of a user 5. Alternatively, this can be based on receiving user input for authentication (e.g. a numerical code). In any case, the user 5 authenticates by interacting with a suitable device (which can be the user device and/or the receptacle holder) for determination when the user 5 is authorised to unlock the receptacle holder. The authentication can be based on presenting an electronic credential (e.g. based on BLE, NFC, RFID (Radio Frequency Identification), etc), passcode, biometrics, etc. When there is a plurality of attachment members 10 in the receptacle holder 1, this step comprises determining which one of the plurality of attachment members 10 to unlock. This determination can be based on an association of a user identifier or receptacle identifier in the unlock signal. Alternatively, code that is input by the user to the attachment member has been previously associated with the receptacle, and thus attachment member, to unlock.

In an *unlock* step 44, the receptacle holder 1 unlocks the receptable 4 from an attachment member 10 being configured to engage with a receptacle 4 to selectively keep the receptacle 4 in a locked engagement with the receptacle holder 1. The unlocking can comprise controlling a motor and/or a solenoid to allow the receptacle to be removed from the attachment member 10 and thus from the receptacle holder 1.

When there is a plurality of attachment members 10, this step comprises unlocking the attachment member 10, of the plurality of attachment members 10, that was determined to be unlocked.

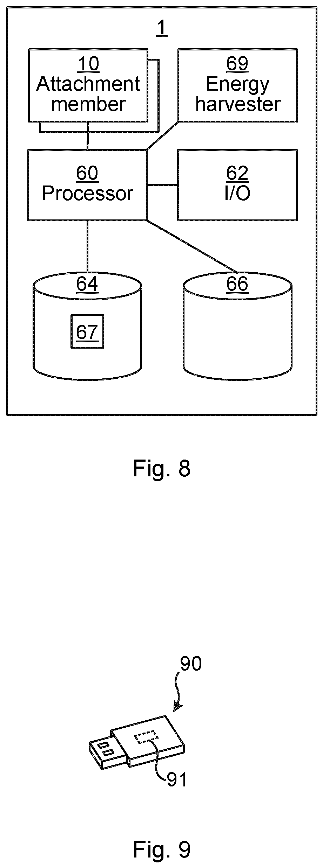

Fig 8 is a schematic diagram illustrating components of the receptacle holder 1 of Figs 1A-B and Fig 2. A processor 60 is provided using any combination of one or more of a suitable central processing unit (CPU), graphics processing unit (GPU), multiprocessor, microcontroller, digital signal processor (DSP), etc., capable of executing software instructions 67 stored in a memory 64, which can thus be a computer program product. The processor 60 could alternatively be implemented using an application specific integrated circuit (ASIC), field programmable gate array (FPGA), etc. The processor 60 is configured to execute the method described with reference to Fig 7 above.

The memory 64 can be any combination of random-access memory (RAM) and/or read-only memory (ROM). The memory 64 also comprises non-transitory persistent storage, which, for example, can be any single one or combination of magnetic memory, optical memory, solid-state memory or even remotely mounted memory.

A data memory 66 is also provided for reading and/or storing data during execution of software instructions in the processor 60. The data memory 66 can be any combination of RAM and/or ROM.

The receptacle holder 1 further comprises an I/O interface 62 for communicating with external and/or internal entities. Optionally, the I/O interface 62 also includes a user interface 7, such as touchscreen or separate keypad/display. The I/O interface 62 can be used to communicate status or events affecting the receptacle holder 1 to a remote server. Such communication can occur via a user device or by the receptacle holder 1 being connected to the Internet without the user device. Such communication allows the server to keep track of receptacles, e.g. based on reporting when a receptacle is released (and thus delivered) or when a receptacle is secured/locked to an attachment member 10.

As illustrated above, the receptacle holder 1 comprises a single or multiple attachment members 10. The energy harvester 69 used to convert mechanical energy, e.g. when a receptacle is pushed to engage with an attachment member 10, to electrical energy for powering the processor and other components of the receptacle holder 1 that require electric energy to operate. The energy harvester 69 can comprise an electrical generator and suitable gears to provide an efficient conversion of the mechanical energy to electrical energy.

Other components of the receptacle holder 1 are omitted in order not to obscure the concepts presented herein.

Fig 9 shows one example of a computer program product 90 not forming part of the invention comprising computer readable means. On this computer readable means, a computer program not forming part of the invention can be stored in a non-transitory memory. The computer program can cause a processor to execute a method according to embodiments described herein. In this example, the computer program product is in the form of a removable solid-state memory, e.g. a Universal Serial Bus (USB) drive. As explained above, the computer program product could also be embodied in a memory of a device, such as the computer program product 64 of Fig 8. While the computer program 91 is here schematically shown as a section of the removable solid-state memory, the computer program can be stored in any way which is suitable for the computer program product, such as another type of removable solid-state memory, or an optical disc, such as a CD (compact disc), a DVD (digital versatile disc) or a Blu-Ray disc.

The aspects of the present disclosure have mainly been described above with reference to a few embodiments. However, as is readily appreciated by a person skilled in the art, other embodiments than the ones disclosed above are equally possible as long as they fall within the scope of the appended patent claims. Thus, while various aspects and embodiments have been disclosed herein, other aspects and embodiments will be apparent to those skilled in the art. The various aspects and embodiments disclosed herein are for purposes of illustration and are not intended to be limiting. The invention is defined by the claims.

## Claims

1. A receptacle holder (1, 1a-b) for selectively allowing a receptacle (4, 4a-b) to be removed, the receptacle holder (1, 1a-b) comprising:
an attachment member (10) being configured to engage with a receptacle (4, 4a-b) to selectively keep the receptacle (4, 4a-b) in a locked engagement with the receptacle holder (1, 1a-b);
a processor (60); and
a memory (64) storing instructions (67) that, when executed by the processor, cause the receptacle holder (1, 1a-b) to:
determine to unlock the attachment member (10); and
unlock the receptacle (4, 4a-b) from the attachment member (10); and **characterised in that** the receptacle holder (1, 1a-b) further comprises an energy harvesting module (69) that is configured to convert mechanical energy, when the receptacle (4, 4a-b) is secured in the attachment member (10), to electrical energy for powering the processor (60).

2. The receptacle holder (1, 1a-b) according to claim 1, wherein the instructions to determine to unlock comprise instructions (67) that, when executed by the processor, cause the receptacle holder (1, 1a-b) to: receive an unlock signal from a user device (2) of a user (5).

3. The receptacle holder (1, 1a-b) according to claim 2, wherein the attachment member (10) enables a receptacle (4, 4a-b) to be secured in locked engagement by pushing the receptacle to engage with the attachment member (10).

4. The receptacle holder (1, 1a-b) according to claim 3, wherein the attachment member (10) comprises a spring-biased latch (12) to enable a receptacle (4, 4a-b) to be secured in locked engagement by pushing the receptacle to engage with the attachment member (10).

5. The receptacle holder (1, 1a-b) according to any one of the preceding claims, comprising a plurality of the attachment members (10) for engagement with respective receptacles (4, 4a-b).

6. The receptacle holder (1, 1a-b) according to claim 5, wherein the instructions to determine to unlock comprise instructions that, when executed by the processor, cause the receptacle holder (1, 1a-b) to determine which one of the plurality of attachment members (10) to unlock; and wherein the instructions to unlock the receptacle comprise instructions that, when executed by the processor, cause the receptacle holder (1, 1a-b) to unlock the attachment member (10), of the plurality of attachment members (10), that was determined to be unlocked.

7. The receptacle holder (1, 1a-b) according to claim 5 or 6, wherein the receptacle holder comprises a plurality of slots (8) configured to hold respective receptacles (4, 4a-b) engaged with respective attachment members (10).

8. A method for selectively allowing a receptacle (4, 4a-b) to be removed, the method being performed by a receptacle holder (1, 1a-b) according to any one of the preceding claims, the method comprising:
converting (40) mechanical energy, when a receptacle (4, 4a-b) is secured in the attachment member (10), to electrical energy for powering the processor (60) using the energy harvesting module of the receptacle holder (1, 1a-b);
determining (42) to unlock the attachment member (10); and
unlocking (44) the receptable (4, 4a-b) from the attachment member (10) being configured to engage with a receptacle (4, 4a-b) to selectively keep the receptacle (4, 4a-b) in a locked engagement with the receptacle holder (1, 1a-b).

9. The method according to claim 8, wherein the determining (42) to unlock comprises receiving an unlock signal from a user device (2) of a user (5).

10. The method according to claim 9, further comprising:
locking (41) a receptacle (4, 4a-b) placed in the attachment member (10) using mechanical engagement between the attachment member and the receptacle (4, 4a-b) when the receptacle is pushed to engage with the attachment member (10).

11. The method according to claim 10, wherein the attachment member (10) comprises a spring-biased latch (12) to enable a receptacle (4, 4a-b) to be secured in locked engagement when the receptacle is pushed to engage with the attachment member (10).

12. The method according to any one of claims 8 to 11, wherein the receptacle holder comprises a plurality of the attachment members (10) for engagement with respective receptacles (4, 4a-b).

13. The method according to claim 12, wherein:
the determining (42) to unlock the attachment member (10) comprises determining which one of the plurality of attachment members (10) to unlock; and
the unlocking (44) comprises unlocking the attachment member (10), of the plurality of attachment members (10), that was determined to be unlocked.

14. The method according to claim 12 or 13, wherein the receptacle holder comprises a plurality of slots configured to hold respective receptacles (4, 4a-b) engaged with respective attachment members (10).

## Patentansprüche

1. Steckdosenhalter (1, 1a-b), der das selektive Entfernen einer Steckdose (4, 4a-b) erlaubt, wobei der Steckdosenhalter (1, 1a-b) Folgendes umfasst:
ein Anbringungselement (10), das dazu konfiguriert ist, mit einer Steckdose (4, 4ab) einzugreifen, um die Steckdose (4, 4a-b) selektiv in einem verriegelten Eingriff mit dem Steckdosenhalter (1, 1a-b) zu halten;
einen Prozessor (60); und
einen Speicher (64), der Anweisungen (67) speichert, die, wenn sie von dem Prozessor ausgeführt werden, den Steckdosenhalter (1, 1a-b) veranlassen zum:
Bestimmen des Entriegelns des Anbringungselements (10); und
Entriegeln der Steckdose (4, 4a-b) aus dem Anbringungselement (10); und **dadurch gekennzeichnet, dass** der Steckdosenhalter (1, 1a-b) weiter Folgendes umfasst
ein Energiegewinnungsmodul (69), das dazu konfiguriert ist, mechanische Energie, wenn die Steckdose (4, 4a-4b) in dem Anbringungselement (10) gesichert ist, in elektrische Energie zum Bestromen des Prozessors (60) umzuwandeln.

2. Steckdosenhalter (1, 1a-b) nach Anspruch 1, wobei die Anweisungen zum Bestimmen des Entriegelns Anweisungen (67) umfassen, die, wenn sie von dem Prozessor ausgeführt werden, den Steckdosenhalter (1, 1a-b) veranlassen: ein Entriegelungssignal von einer Benutzervorrichtung (2) eines Benutzers (5) zu empfangen.

3. Steckdosenhalter (1, 1a-b) nach Anspruch 2, wobei es das Anbringungselement (10) ermöglicht, eine Steckdose (4, 4a-b) in verriegeltem Eingriff zu sichern, indem die Steckdose in Eingriff mit dem Anbringungselement (10) gedrückt wird.

4. Steckdosenhalter (1, 1a-b) nach Anspruch 3, wobei das Anbringungselement (10) eine federvorgespannte Klinke (12) umfasst, um es einer Steckdose (4, 4a-b) zu ermöglichen, in verriegeltem Eingriff gesichert zu werden, indem die Steckdose in Eingriff mit dem Anbringungselement (10) gedrückt wird.

5. Steckdosenhalter (1, 1a-b) nach einem der vorstehenden Ansprüche, der eine Vielzahl der Anbringungselemente (10) zum Eingriff mit jeweiligen Steckdosen (4, 4a-b) umfasst.

6. Steckdosenhalter (1, 1a-b) nach Anspruch 5, wobei die Anweisungen zum Bestimmen des Entriegelns Anweisungen umfassen, die, wenn sie von dem Prozessor ausgeführt werden, den Steckdosenhalter (1, 1a-b) veranlassen zu bestimmen, welches der Vielzahl von Anbringungselementen (10) entriegelt werden soll; und wobei die Anweisungen zum Entriegeln der Steckdose Anweisungen umfassen, die, wenn sie von dem Prozessor ausgeführt werden, den Steckdosenhalter (1, 1a-b) veranlassen, das Anbringungselement (10) der Vielzahl von Anbringungselementen (10), das zum Entriegeln bestimmt wurde, zu entriegeln.

7. Steckdosenhalter (1, 1a-b) nach Anspruch 5 oder 6, wobei der Steckdosenhalter eine Vielzahl von Schlitzen (8) umfasst, die dazu konfiguriert sind, jeweilige Steckdosen (4, 4a-b) in Eingriff mit jeweiligen Anbringungselementen (10) zu halten.

8. Verfahren zum selektiven Erlauben des Entfernens einer Steckdose (4, 4a-b), wobei das Verfahren von einem Steckdosenhalter (1, 1a-b) nach einem der vorstehenden Ansprüche durchgeführt wird, wobei das Verfahren Folgendes umfasst:
Umwandeln (40) mechanischer Energie, wenn eine Steckdose (4, 4a-b) in dem Anbringungselement (10) gesichert ist, in elektrische Energie zum Bestromen des Prozessors (60) unter Verwendung des Energiegewinnungsmoduls des Steckdosenhalters (1, 1a-b);
Bestimmen (42), das Anbringungselement (10) zu entriegeln; und
Entriegeln (44) der Steckdose (4, 4a-b) von dem Anbringungselement (10), das dazu konfiguriert ist, in eine Steckdose (4, 4a-b) einzugreifen, um die Steckdose (4, 4a-b) wahlweise in einem verriegelten Eingriff mit dem Steckdosenhalter (1, 1a-b) zu halten.

9. Verfahren nach Anspruch 8, wobei das Bestimmen (42) des Entriegelns Empfangen eines Entriegelungssignals von einer Benutzervorrichtung (2) eines Benutzers (5) umfasst.

10. Verfahren nach Anspruch 9, das weiter Folgendes umfasst:
Verriegeln (41) einer Steckdose (4, 4a-b), die in dem Anbringungselement (10) platziert ist, unter Verwendung von mechanischem Eingriff zwischen dem Anbringungselement und der Steckdose (4, 4a-b), wenn die Steckdose in Eingriff mit dem Anbringungselement (10) gedrückt wird.

11. Verfahren nach Anspruch 10, wobei das Anbringungselement (10) eine federvorgespannte Verriegelung (12) umfasst, um es einer Steckdose (4, 4a-b) zu ermöglichen, in verriegeltem Eingriff gesichert zu werden, wenn die Steckdose in Eingriff mit dem Anbringungselement (10) gedrückt wird.

12. Verfahren nach einem der Ansprüche 8 bis 11, wobei der Steckdosenhalter eine Vielzahl der Anbringungselemente (10) zum Eingriff mit jeweiligen Steckdosen (4, 4a-b) umfasst.

13. Verfahren nach Anspruch 12, wobei:
das Bestimmen (42) des Entriegelns des Anbringungselements (10) Folgendes umfasst
Bestimmen, welches der Vielzahl von Anbringungselementen (10) entriegelt werden soll; und
das Entriegeln (44) Entriegeln des Anbringungselements (10) der Vielzahl von Anbringungselementen (10) umfasst, dessen Entriegeln bestimmt wurde.

14. Verfahren nach Anspruch 12 oder 13, wobei der Steckdosenhalter eine Vielzahl von Schlitzen umfasst, die dazu konfiguriert ist, jeweilige Steckdosen (4, 4a-b), die mit jeweiligen Anbringungselementen (10) in Eingriff stehen, zu halten.

## Revendications

1. Porte-récipient (1, 1a-b) pour permettre sélectivement à un récipient (4, 4a-b) d'être retiré, le porte-récipient (1, 1a-b) comprenant :
un élément de fixation (10) étant configuré pour entrer en prise avec un récipient (4, 4a-b) afin de maintenir sélectivement le récipient (4, 4a-b) dans une mise en prise verrouillée avec le porte-récipient (1, 1a-b) ;
un processeur (60) ; et
une mémoire (64) stockant des instructions (67) qui, lorsqu'elles sont exécutées par le processeur, amènent le porte-récipient (1, 1a-b) à :
déterminer le déverrouillage de l'élément de fixation (10) ; et
déverrouiller le récipient (4, 4a-b) de l'élément de fixation (10) ; et **caractérisé en ce que** le porte-récipient (1, 1a-b) comprend en outre
un module de récupération d'énergie (69) qui est configuré pour convertir de l'énergie mécanique, lorsque le récipient (4, 4a-b) est fixé dans l'élément de fixation (10), en énergie électrique pour alimenter le processeur (60).

2. Porte-récipient (1, 1a-b) selon la revendication 1, dans lequel les instructions permettant de déterminer le déverrouillage comprennent des instructions (67) qui, lorsqu'elles sont exécutées par le processeur, amènent le porte-récipient (1, 1a-b) à : recevoir un signal de déverrouillage d'un dispositif utilisateur (2) d'un utilisateur (5).

3. Porte-récipient (1, 1a-b) selon la revendication 2, dans lequel l'élément de fixation (10) permet à un récipient (4, 4a-b) d'être fixé dans une mise en prise verrouillée en poussant le récipient de manière à ce qu'il entre en prise avec l'élément de fixation (10).

4. Porte-récipient (1, 1a-b) selon la revendication 3, dans lequel l'élément de fixation (10) comprend un verrou sollicité par ressort (12) pour permettre à un récipient (4, 4a-b) d'être fixé dans une mise en prise verrouillée en poussant le récipient de manière à ce qu'il entre en prise avec l'élément de fixation (10).

5. Porte-récipient (1, 1a-b) selon l'une quelconque des revendications précédentes, comprenant une pluralité d'éléments de fixation (10) pour la mise en prise avec des récipients (4, 4a-b) respectifs.

6. Porte-récipient (1, 1a-b) selon la revendication 5, dans lequel les instructions permettant de déterminer le déverrouillage comprennent des instructions qui, lorsqu'elles sont exécutées par le processeur, amènent le porte-récipient (1, 1a-b) à déterminer lequel parmi la pluralité d'éléments de fixation (10) déverrouiller ; et dans lequel les instructions destinées à déverrouiller le récipient comprennent des instructions qui, lorsqu'elles sont exécutées par le processeur, amènent le porte-récipient (1, 1a-b) à déverrouiller l'élément de fixation (10), de la pluralité d'éléments de fixation (10), qui a été déterminé comme devant être déverrouillé.

7. Porte-récipient (1, 1a-b) selon la revendication 5 ou 6, dans lequel le porte-récipient comprend une pluralité de fentes (8) configurées pour maintenir des récipients (4, 4a-b) respectifs mis en prise avec des éléments de fixation (10) respectifs.

8. Procédé pour permettre sélectivement à un récipient (4, 4a-b) d'être retiré, le procédé étant réalisé par un porte-récipient (1, 1a-b) selon l'une quelconque des revendications précédentes, le procédé comprenant :
la conversion (40) d'énergie mécanique, lorsqu'un récipient (4, 4a-b) est fixé dans l'élément de fixation (10), en énergie électrique pour alimenter le processeur (60) en utilisant le module de récupération d'énergie du porte-récipient (1, 1a-b) ;
la détermination (42) du déverrouillage de l'élément de fixation (10) ; et
le déverrouillage (44) du récipient (4, 4a-b) de l'élément de fixation (10) étant configuré pour entrer en prise avec un récipient (4, 4a-b) afin de maintenir sélectivement le récipient (4, 4a-b) dans une mise en prise verrouillée avec le porte-récipient (1, 1a-b).

9. Procédé selon la revendication 8, dans lequel la détermination (42) du déverrouillage comprend la réception d'un signal de déverrouillage provenant d'un dispositif utilisateur (2) d'un utilisateur (5).

10. Procédé selon la revendication 9, comprenant en outre :
le verrouillage (41) d'un récipient (4, 4a-b) placé dans l'élément de fixation (10) en utilisant une mise en prise mécanique entre l'élément de fixation et le récipient (4, 4a-b) lorsque le récipient est poussé de manière à entrer en prise avec l'élément de fixation (10).

11. Procédé selon la revendication 10, dans lequel l'élément de fixation (10) comprend un verrou sollicité par ressort (12) pour permettre à un récipient (4, 4a-b) d'être fixé dans une mise en prise verrouillée lorsque le récipient est poussé de manière à ce qu'il entre en prise avec l'élément de fixation (10).

12. Procédé selon l'une quelconque des revendications 8 à 11, dans lequel le porte-récipient comprend une pluralité d'éléments de fixation (10) pour la mise en prise avec des récipients (4, 4a-b) respectifs.

13. Procédé selon la revendication 12, dans lequel :
la détermination (42) du déverrouillage de l'élément de fixation (10) comprend
la détermination de l'élément de fixation à déverrouiller parmi la pluralité d'éléments de fixation (10) ; et
le déverrouillage (44) comprend le déverrouillage de l'élément de fixation (10), de la pluralité d'éléments de fixation (10), qui a été déterminé comme devant être déverrouillé.

14. Procédé selon la revendication 12 ou 13, dans lequel le porte-récipient comprend une pluralité de fentes configurées pour maintenir des récipients (4, 4a-b) respectifs mis en prise avec des éléments de fixation (10) respectifs.
